# EUROPEAN PATENT APPLICATION

(11) **EP 2 833 612 A1**
(43) Date of publication of application: **04.02.2015**
(21) Application number: 14156688.5
(22) Date of filing: 26.02.2014
(51) Int. Cl.: H04N 1/00

(54) **Image forming apparatus and mobile device for forming wireless configuration by using near field communication (NFC)**

(30) Priority: 29.07.2013 KR 20130089828
(71) Applicant: Samsung Electronics Co., Ltd., Suwon-si Gyeonggi-do 443-742 (KR)
(72) Inventor: Jo, Byeong-tak, Gyeonggi-do (KR); Kim, Byoung-yue, Gyeonggi-do (KR); Park, Jung-jin, Gyeonggi-do (KR); Byun, Hyung-sik, Gyeonggi-do (KR)
(74) Representative: Bray, Richard Anthony

(57) **Abstract**

An image forming apparatus that supports a near field communication (NFC) function includes an NFC tag for storing installation information of an application; a wireless communication module for receiving a profile including wireless configuration data from a mobile device, wherein the wireless configuration data is input by a user in execution of the application that is installed in the mobile device by using the installation information; and a control unit for forming wireless configuration based on the profile.

## Description

### CROSS-REFERENCE TO RELATED APPLICATIONS

This application claims the priority benefit of Korean Patent Application No. 10-2013-0089828, filed on July 29, 2013, in the Korean Intellectual Property Office, the disclosure of which is incorporated herein in its entirety by reference.

### BACKGROUND

### 1. Field

One or more embodiments relate to an image forming apparatus and a mobile device that support a near field communication (NFC) function.

### 2. Description of the Related Art

Near field communication (NFC) is a contactless short-range wireless communication standard for electronic devices that are within a short distance of 10 cm from each other, have low power consumption, and operate at a frequency of 13.56 MHz, and was developed by a joint project between NXP Semiconductors of the Netherlands and Sony of Japan in 2002. A data transfer rate of NFC is 424 Kbps, and NFC has excellent security due to high proximity and use of an encryption technology. NFC does not use a complicated pairing process for recognition of devices but allows devices to recognize one another within 1/10 second or less.

In particular, NFC is a smart card type contactless wireless communication technology using radio frequency identification (RFID) technology. In addition, NFC builds upon the RFID technology by allowing two-way communication compared to smart cards. NFC allows use of a relatively large memory storage space and a large variety of services. Accordingly, electronic devices, such as smartphones and personal computers (PCs), using NFC technology have recently been released on the market.

### SUMMARY

According to the present invention there is provided an apparatus and method as set forth in the appended claims. Other features of the invention will be apparent from the dependent claims, and the description which follows.

In an aspect of one or more embodiments, there is provided an image forming apparatus and a mobile device that perform wireless configuration by using near field communication (NFC).

In an aspect of one or more embodiments, there is provided an image forming apparatus that supports a near field communication (NFC) function includes an NFC tag for storing installation information of an application; a wireless communication module for receiving a profile comprising wireless configuration data from a mobile device, wherein the wireless configuration data is input by a user in execution of the application that is installed in the mobile device by using the installation information; and a control unit for forming a wireless configuration based on the profile.

In an aspect of one or more embodiments, there is provided a mobile device that supports a near field communication (NFC) function includes an NFC tag processing unit for reading installation information of an application stored in an NFC tag when the NFC tag attached to an image forming apparatus is tagged; a control unit for generating a profile for wireless configuration of the image forming apparatus by using a wireless configuration application installed based on the installation information; and a wireless communication unit for transmitting the profile to the image forming apparatus.

In an aspect of one or more embodiments, there is provided a method of forming a wireless configuration by an image forming apparatus that supports a near field communication (NFC) function includes operations of reading installation information of an application stored in an NFC tag that is attached to the image forming apparatus; generating a profile for the wireless configuration of the image forming apparatus by using a wireless configuration application installed based on the installation information; and forming the wireless configuration based on the profile.

In an aspect of one or more embodiments, there is provided a method of forming a wireless configuration by an image forming apparatus that supports near field communication (NFC) with a mobile device, the method including reading installation information of an application stored in an NFC tag that is attached to the image forming apparatus by tagging the image forming apparatus using the mobile device; executing a market application for downloading the wireless configuration application to the mobile device based on the installation information; generating a profile for the wireless configuration of the image forming apparatus by using the wireless configuration application installed in the mobile device; and forming the wireless configuration based on the profile.

In an aspect of one or more embodiments, there is provided at least one non-transitory computer readable medium storing computer readable instructions to implement methods of one or more embodiments.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1A illustrates a near field communication (NFC) environment according to an embodiment;
FIG. 1B illustrates an NFC environment similar to the NFC environment of FIG.1A, according to an embodiment;
FIG. 1C illustrates a wireless communication environment in which an image forming apparatus and a mobile device operate, according to an embodiment;
FIG. 2A is a graph comparing data rates and communication ranges of NFC and other wireless communication methods;
FIG. 2B is a view of standards related to the NFC technology;
FIGS. 3A and 3B are diagrams for explaining three communication modes of NFC;
FIG. 4 is a block diagram illustrating a basic hardware structure of the image forming apparatus supporting an NFC function, according to an embodiment;
FIG. 5 illustrates an NFC tag installed in the image forming apparatus of FIG. 1B and information stored in the NFC tag;
FIG. 6 is a diagram illustrating an image forming apparatus that performs wireless configuration by using an NFC tag;
FIG. 7 is a diagram illustrating the image forming apparatus that performs wireless configuration by using an NFC tag;
FIG. 8 is a diagram illustrating the mobile device and the image forming apparatus that perform wireless configuration by using NFC;
FIG. 9 is a flowchart of a method of forming a wireless configuration by the image forming apparatus;
FIG. 10 illustrates an example in which wireless configuration of an image forming apparatus is performed by using a wireless local area network (WLAN) option card;
FIG. 11 illustrates the WLAN option card, the image forming apparatus, and a personal computer (PC) that performs the wireless configuration of the image forming apparatus by using the WLAN option card;
FIG. 12 is a flowchart of a method of forming a wireless configuration of the image forming apparatus by using the WLAN option card;
FIG. 13 illustrates an example in which wireless configuration of an image forming apparatus is performed by using a custom access point (AP);
FIG. 14 illustrates the wireless configuration of the image forming apparatus which is performed by using the custom AP; and
FIG. 15 is a flowchart of a method of forming a wireless configuration of the image forming apparatus by using the custom AP.

### DETAILED DESCRIPTION

Reference will now be made in detail to embodiments, examples of which are illustrated in the accompanying drawings, wherein like reference numerals refer to the like elements throughout. In this regard, embodiments may have different forms and should not be construed as being limited to the descriptions set forth herein. Accordingly, exemplary embodiments are merely described below, by referring to the figures, to explain aspects of the present disclosure.

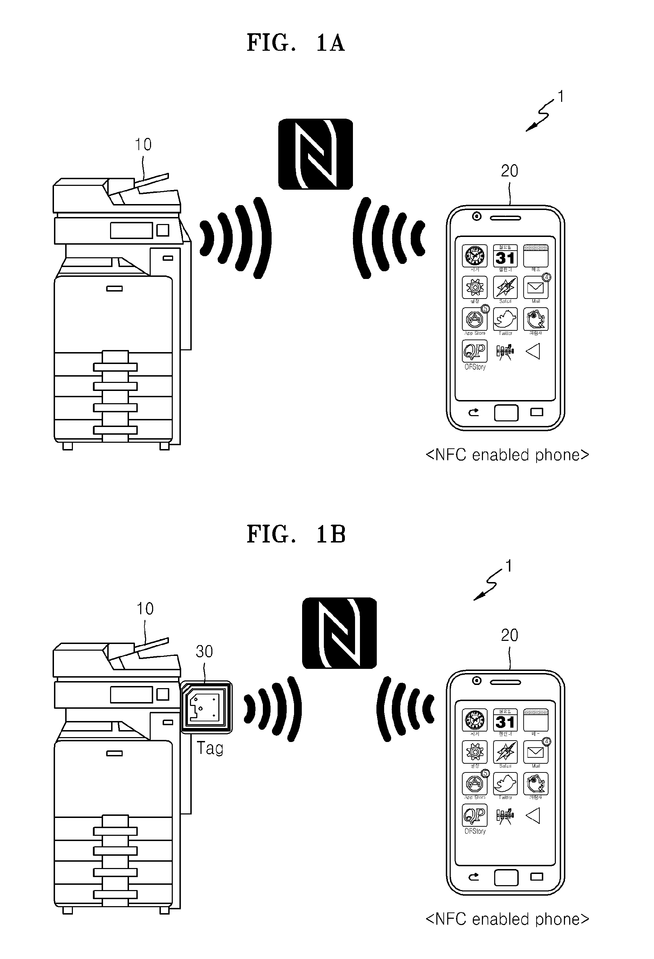

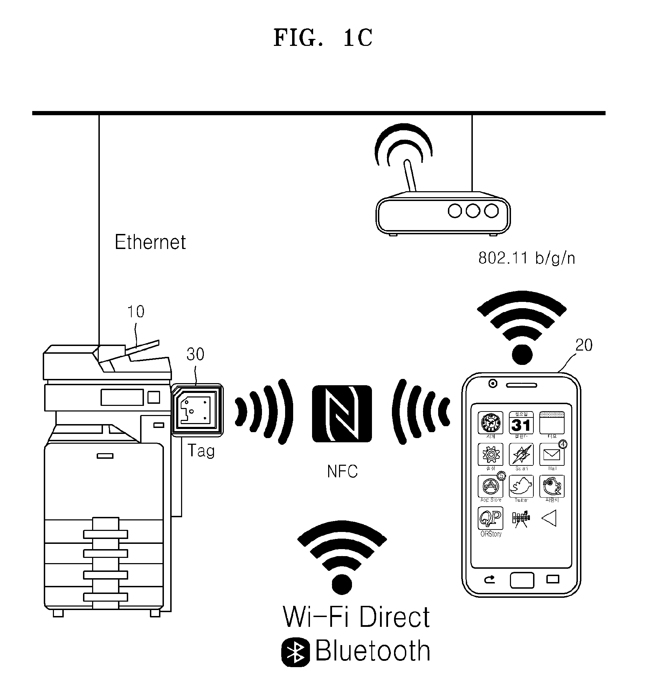

FIG. 1A illustrates a near field communication (NFC) environment 1 according to an embodiment. Referring to FIG. 1A, an image forming apparatus 10 and a mobile device 20 each supporting an NFC function (operation) are present in the NFC environment 1. An example of mobile device 20 is a smartphone. An NFC chip is embedded in advance in the image forming apparatus 10 illustrated in FIG. 1, and thus communication between the image forming apparatus 10 and the mobile device 20 may be performed via NFC.

FIG. 1B illustrates an NFC environment 1 which is similar to the NFC environment 1 of FIG.1A, according to an embodiment. Referring to FIG. 1B, an image forming apparatus 10 and a mobile device 20 each supporting an NFC function are also present in the NFC environment 1. In particular, an NFC tag is embedded in advance in the image forming apparatus 10 of FIG. 1A, whereas no NFC tag 30 is embedded in advance in the image forming apparatus 10 in FIG. 1B. Accordingly, the image forming apparatus 10 of FIG. 1B may communicate with the mobile device 20 via NFC only when an NFC tag 30 is installed later in the image forming apparatus 10 of FIG. 1B.

However, if an NFC tag 30 is installed later in the image forming apparatus 10 of FIG. 1B, then an operation in the NFC environment 1 of an embodiment is identical to that in the NFC environment 1 of FIG. 1A when the NFC tag 30 is embedded in advance.

While just one pair of devices, that is, the image forming apparatus 10 and the mobile device 20, is present in the NFC environment 1 for convenience of description, more electronic devices of different types that support an NFC function may also be present in the NFC environment 1. n.

FIG. 1C illustrates a wireless communication environment in which an image forming apparatus 10 and a mobile device 20 operate, according to an embodiment. Referring to FIG. 1C, other peripheral wired/wireless networks are illustrated in addition to the NFC environment 1 of FIG. 1A or 1B. The NFC environment 1 may be used in connection with peripheral wired/wireless networks, such as Wi-Fi Direct, Bluetooth, Ethernet, 802.11a/b/g/n, etc.

Before describing the present embodiment in detail, an NFC technology will be described below.

NFC is a contactless short-range wireless communication standard for electronic devices that are within a short distance of about 10 cm of each other, have low power consumption, and operate at a frequency of 13.56 MHz. A data transfer rate of NFC is 424 Kbps, and NFC has excellent security due to high proximity and use of an encryption technology. NFC does not use a complicated pairing process for recognition of devices and allows devices to recognize one another within 1/10 second or less. In particular, NFC is a smart card type contactless wireless communication technology using radio frequency identification (RFID) technology. In addition, NFC builds upon RFID technology by allowing two-way communication compared to smart cards, and also allows use of a relatively large memory storage space and a large variety of services.

In detail, NFC is a wireless communication method in which data is directly exchanged between terminals, for example, between the image forming apparatus 10 and the mobile device 20, without using a communication network, and is a type of RFID method. A wireless communication method using RFID may be classified according to frequencies used. For example, RFID at 13.56 MHz is mainly used for smart cards, such as transit cards or entrance cards, and RDIF at 900 MHz is used mainly for logistics. NFC corresponds to RFID which, like smartcards, uses a frequency of 13.56 MHz. However, unlike smartcards, which allow only one-way communication, NFC allows two-way communication. Accordingly, NFC is different from smart cards, which function merely as a tag that stores particular information and transmits the same to a reader. NFC allows a tag function according to necessity, but also supports a function of recording information on the tag, and may be used in peer to peer (P2P) data exchange between terminals in which NFC is set.

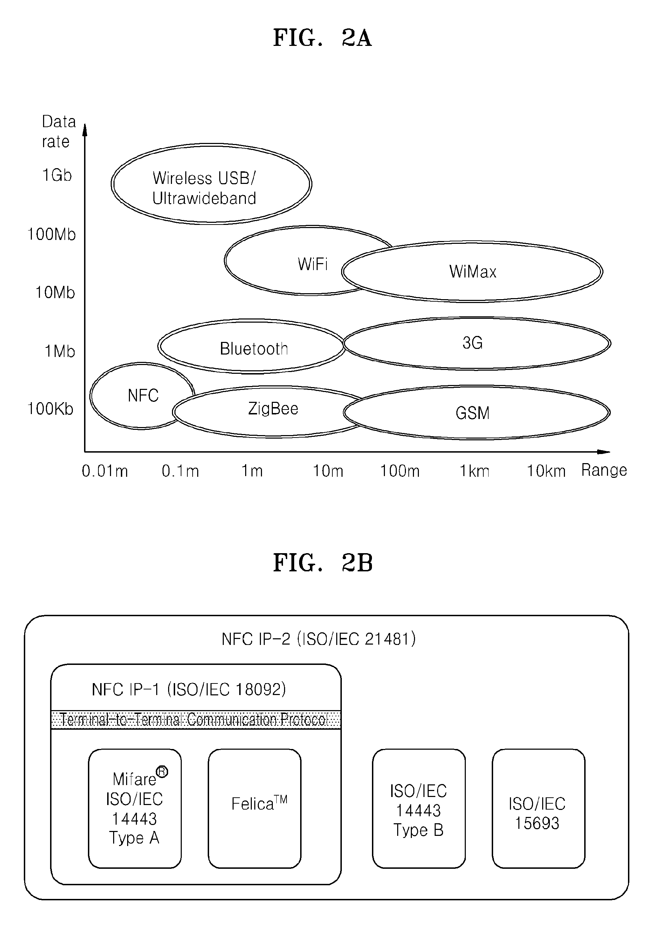

NFC which is developed based on RFID may be compared with other wireless communication methods, such as Wi-Fi Direct, Bluetooth, ZigBee, etc., as shown in FIG. 2A.

FIG. 2A is a graph for comparing data rates and communication ranges of NFC and other wireless communication methods. Referring to FIG. 2A, compared to other wireless communication methods, NFC may operate at a distance within about 10 cm. Unlike Bluetooth or Wi-Fi etc., which allow communication within about several to several tens of meters, NFC allows communication only within an extremely short distance (about 10 cm).

In addition, NFC may be compared to other wireless communication methods, such as Bluetooth, ZigBee, etc., as shown in Table 1 below.

**[Table 1]**

| **Technology** | **Frequency used** | **Security** | **Standard range** | **Major service area** |
|---|---|---|---|---|
| NFC | 13.56 MHz | Encryption is applied | International Standard | contactless payment, RFID, file transmission |
| Bluetooth | 2.4 GHz | N/A | International Standard | file transmission |
| ZigBee | 2.4 GHz | N/A | International Standard | device control, RFID |
| 900MHz RFID | 900 MHz | N/A | Korean standard | RFID |

In other words, compared to other wireless communication methods, NFC operates only within a distance of 10 cm and an encryption technology is used, and thus, a security level of NFC is high. Accordingly, when used in combination with other high-speed wireless communication methods, such as 3G or Wi-Fi, communication between devices via NFC may be performed with a higher efficiency. For example, when NFC and Bluetooth technology are combined, NFC may be used in connecting terminals (authorization) and Bluetooth may be used in data transmission between the terminals to thereby enable more efficient communication between the devices.

FIG. 2B is a view showing standards related to the NFC technology.

Referring to FIG. 2B, the NFC standard technology follows the International Organization for Standardization (ISO) and is also an extension of ISO 14443 Proximity-card Standard, and here, the inclusion relation of NFC IP-1(NFC Interface Protocol-1)(ISO/IEC 18092) and NFC IP-2(ISO/IEC 21481) is illustrated. Here, ISO/IEC 14443 Type A and Type B, FeliCa, and ISO/IEC 15693 are international standards of four areas of contactless cards operating at 13.56 MHz. Also, ISO/IEC 18092 defines communication modes for NFC interface and protocol.

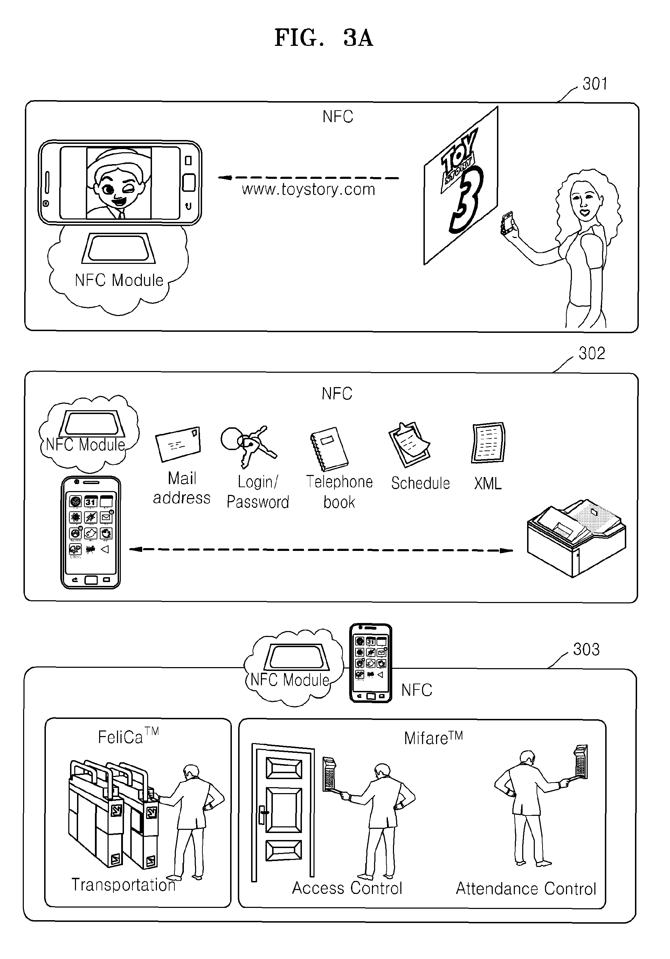

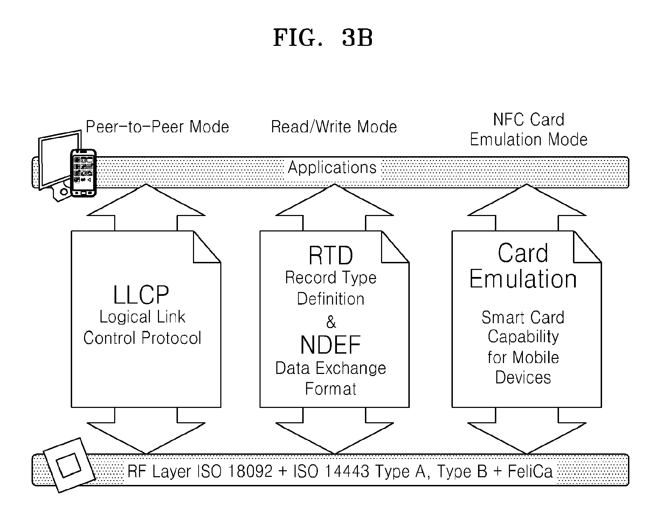

FIGS. 3A and 3B are diagrams for explaining three communication modes of NFC.

Referring to FIG. 3A, the NFC Forum has standardized major NFC communication modes, which are a Reader/Writer mode 301, a P2P mode 302, and a Card Emulation mode 303. In sum, the three communication modes of NFC may be listed as in Table 2 below.

**[Table 2]**

| | **ISO/IEC 15693** | **ISO/IEC 18092** | **ISO/IEC 14443** |
|---|---|---|---|
| **Operational mode** | communication between reader and tag (VCD2 mode) | communication between devices (P2P mode) | communication between reader and tag (PCD1 mode) |
| **Power supply** | Manual | active and manual | manual |
| **Range of communication** | 1 m | 10-20 cm | 10 cm |
| **Data rate** | 26 Kbps or less | 106 Kbps, 212 Kbps, 424 Kbps | 106 Kbps |

| | | | |
|---|---|---|---|
| (PCD: Proximity Coupling Device, VCD: Vicinity Coupling Device) | | | |

First, in the Reader/Writer mode 301, the mobile device 20 in which an NFC tag is embedded operates as a reader for reading another NFC tag or operates as a writer for inputting information to another NFC tag.

In the P2P mode 302, communication at a link level between two NFC terminals, for example, between the image forming apparatus 10 and the mobile device 20, is supported. To establish a connection, a client (NFC P2P initiator, the mobile device 20) searches for a host (NFC P2P target, the image forming apparatus 10) and transmits data of an NFC Data Exchange Format (NDEF) message format. In the P2P mode 302, data, such as emails, schedule, telephone numbers, and XML data, may be exchanged just by touching the image forming apparatus 10 with the mobile device 20.

Finally, in the Card Emulation mode 303, the mobile device 20, in which an NFC tag is embedded, operates as a smart card (ISO/IEC 14443). Accordingly, NFC is compatible not only with ISO 14443, which is the international standard for contactless cards, but also with Felica by Sony and MiFare by Philips.

In order to coordinately provide the three communication modes of NFC, a protocol has been standardized as illustrated in FIG. 3B. Referring to FIG. 3B, a software structure in a NFC system is illustrated.

Logical Link Control Protocol (LLCP) is a protocol that sets a communication connection between layers and controls the same. A NFC Data Exchange Format (NDEF) message is a basic message structure defined in an NFC communication protocol. The NDEF is a standard exchange format for Uniform Resource Identifier (URI), smart posters, and others, which defines a recording format regarding message exchange between NFC Forum-compatible devices and tags. An NDEF message includes at least one NDEF record. The NDEF record includes a payload that is described according to type, length, and option identifiers. An NDEF payload refers to application data included in an NDEF record. Record Type Definition (RTD) defines a record type and a type name which may correspond to an NDEF record.

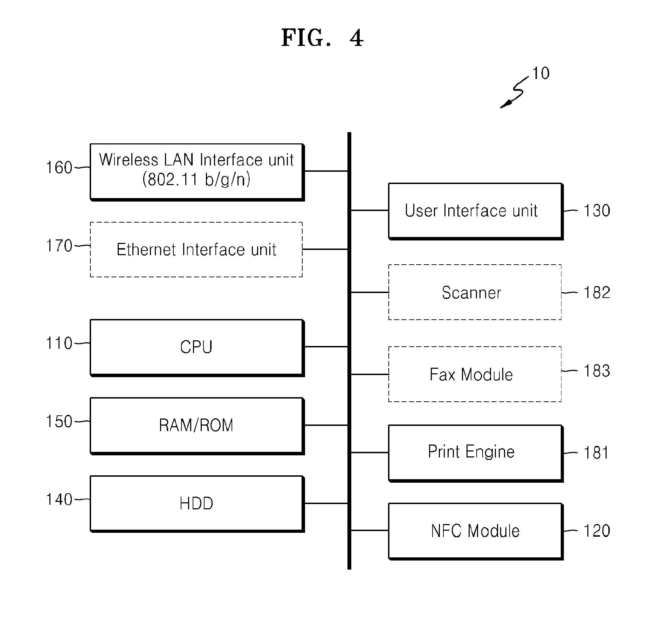

FIG. 4 is a block diagram illustrating a basic hardware structure of the image forming apparatus 10 supporting an NFC function, according to an embodiment. Referring to FIG. 4, the image forming apparatus 10 may include a central processing unit (CPU) 110, an NFC module 120, a user interface unit (user interface) 130, a hard disk drive (HDD) 140, a random access memory/read only memory (RAM/ROM) 150, a wireless local area network (WLAN) interface unit (WLAN interface)160, an Ethernet interface unit (Ethernet interface) 170, a print engine 181, a scanner 182, and a fax module 183. If the image forming apparatus 10 supports only WLAN, the Ethernet interface unit 170 may not be included. Also, if the image forming apparatus 10 is a printer, the scanner 182 and the fax module 183 may not be included.

The CPU 110 controls the overall operation of the image forming apparatus 10, and information needed for controlling and print data is stored in the HDD 140 and the RAM/ROM 150 and read therefrom when necessary.

The user interface unit 130 is hardware used as medium for the user when the user checks information of the image forming apparatus 10 and inputs a command to the image forming apparatus 10. The user interface unit 130 may be designed in various manners according to the products that include the same. For example, the user interface unit 130 may be formed in a simple form of two or four lines on a display, such as a liquid crystal display (LCD) or light emitting diode (LED), or as a graphic user interface (GUI), so as to enable various graphical representations.

An example of the WLAN interface unit 160 is hardware that has IEEE 802.11 b/g/n functionality, and may communicate with a main board of the image forming apparatus 10 via a universal serial bus (USB) or the like. The WLAN interface unit 160 may also support Wi-Fi Direct at the same time.

An example of the Ethernet interface unit 170 is hardware that performs wired Ethernet communication according to IEEE 802.3.

The print engine 181, the scanner 182, and the fax module 183 refer to hardware for performing a printing function, a scan function, and a fax function, respectively.

In particular, the image forming apparatus 10 includes the NFC module 120 to thereby communicate with other NFC devices, such as the mobile device 20, via NFC. The NFC module 120 is in charge of the NFC function and may read from or write data to an NFC tag. Also, communication with the main board of the image forming apparatus 10 is performed by using a Universal Asynchronous Receiver/Transmitter (UART), an Inter Integrated Circuit (12C), a Serial Peripheral Interface Bus (SPI), or the like. As described above with reference to FIGS. 1A and 1B, the NFC module 120 may be embedded in the image forming apparatus 10 in advance at the time of shipping the products, or may be available when the user installs the NFC tag 30 later.

Although not shown in FIG. 4, the image forming apparatus 10 may also include other wireless communication modules, such as a Bluetooth module or a ZigBee module.

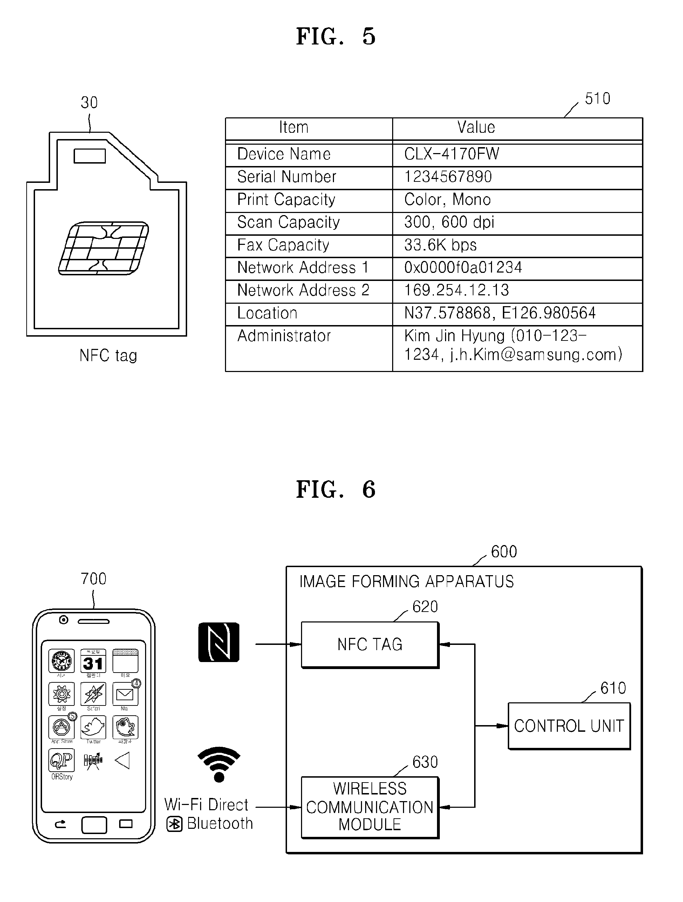

FIG. 5 illustrates the NFC tag 30 installed in the image forming apparatus 10 of FIG. 1 B and information 510 stored in the NFC tag 30. Referring to FIG. 5, in the case of the image forming apparatus 10 of FIG. 1B, the NFC function may be utilized when the NFC tag 30 is inserted into a slot that is provided in advance in the image forming apparatus 10. The information 510 of the NFC tag 30, for example, performance information of the image forming apparatus 10, may be recorded by other NFC devices in the Reader/Writer mode 301 or may be stored in advance by a manager.

Hereinafter, an image forming apparatus and a mobile device that perform wireless configuration by using NFC according to one or more embodiments and detailed functions and operations thereof will be described in detail with reference to the drawings below.

FIG. 6 is a diagram illustrating an image forming apparatus 600 that performs wireless configuration by using an NFC tag. Referring to FIG. 6, the image forming apparatus 600 is illustrated as including just hardware components related to the present embodiment from among the hardware components of the image forming apparatus 10 illustrated in FIG. 4. However, elements that are omitted in FIG. 6 but described with reference to the image forming apparatus 10 of FIG. 4 may also be included in the image forming apparatus 600.

An image forming operation may be a copy operation, a print operation, a scan operation, a fax operation, or the like that are supported by the image forming apparatus 600. Also, in order to perform the image forming operation, the image forming apparatus 600 may use various options including a paper option such as A3, A4, etc., a paper count option for a print or copy operation, a tray setting option, a color or monochrome print option, a color or monochrome copy option, a scan-to-email option, a scan-to-server option, or the like.

Referring to FIG. 6, the image forming apparatus 600 includes a control unit (controller) 610, an NFC tag 620, and a wireless communication module 630. The image forming apparatus 600 performs wireless configuration with a mobile device 700 by using NFC. The image forming apparatus 600 and the mobile device 700 may exchange data by using NFC, Wi-Fi Direct (WFD), Bluetooth, or the like.

The NFC tag 620 stores installation information of an application. The installation information is used to install the application in the mobile device 700. For example, the installation information may include a uniform resource locator (URL) for downloading the application, and information such as a unique name or unique number of the application which is for identifying the application.

The application is previously made (generated) according to specification of the image forming apparatus 600 and is stored in a server (not shown). That is, the application only for the image forming apparatus 600 is made according to specification such as a wireless communication technology that is supported by the image forming apparatus 600.

The wireless communication module 630 receives, from the mobile device 700, a profile that is generated by the application. The profile includes wireless configuration data that is input by a user in execution of the application that is installed in the mobile device 700 by using the installation information stored in the NFC tag 620.

The profile includes a plurality of pieces of information for wireless configuration of the image forming apparatus 600. For example, the profile includes a password for allowing the image forming apparatus 600 to be wirelessly connected to an access point (AP). Also, the profile includes information indicating to which AP the image forming apparatus 600 is to be wirelessly connected. The profile includes service set identifier definition (SSID) information indicating a wireless network to be used by the image forming apparatus 600. The profile is encrypted by using a securing method such as Wi-Fi protected access (WPA), WPA2, or the like.

As an example, a WFD configuration between the mobile device 700 and the image forming apparatus 600 is completed by the user when the application is executed in the mobile device 700. Thus, the profile generated in the mobile device 700 is transmitted to the image forming apparatus 600 via WFD.

The control unit 610 performs wireless configuration based on the profile. The profile includes the information indicating to which AP the image forming apparatus 600 is wirelessly connected, and a password of a target AP. Thus, the control unit 610 attempts to access the target AP based on the information included in the profile. Although the control unit 610 does not receive a user input consisting of a password for accessing the target AP, the control unit 610 may access the target AP by using the password included in the profile. Thus, the user may complete the wireless configuration by using the mobile device 700, and thus, an inconvenient task such as inputting a password into the image forming apparatus 600 may be avoided.

When the wireless configuration is completed, the control unit 610 creates a completion message and then the wireless communication module 630 transmits the completion message to the application.

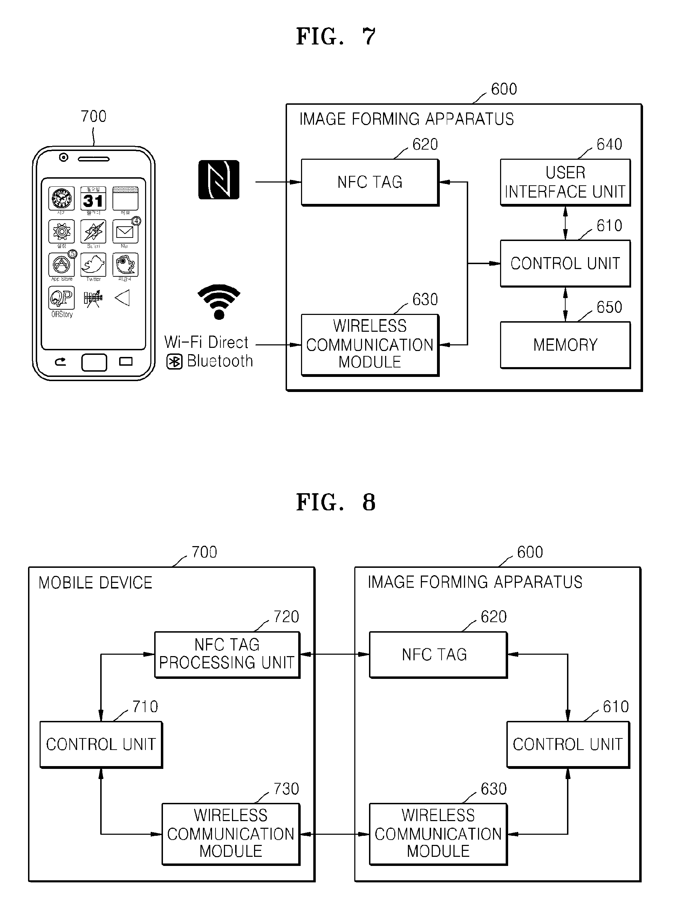

FIG. 7 is a diagram illustrating the image forming apparatus 600 that performs wireless configuration by using an NFC tag, according to an embodiment. The image forming apparatus 600 of FIG. 7 is another example of the image forming apparatus 600 of FIG. 6. Thus, hereinafter, although descriptions are omitted, if the descriptions are described above with reference to the image forming apparatus 600 of FIG. 6, the descriptions may also be applied to the image forming apparatus 600 of FIG. 7.

Referring to FIG. 7, the image forming apparatus 600 further includes a user interface unit (user interface) 640 and a memory 650. The user interface unit 640 may display user information related to a wireless configuration and may receive a data input from the user. Also, the user interface unit 640 may display an AP to which the image forming apparatus 600 is currently connected. When the wireless configuration is completed, the user interface unit 640 may display a phrase or figure indicating completion of the wireless configuration.

The memory 650 stores the profile received from the mobile device 700, and the information related to wireless configuration which is set based on the profile. Also, the memory 650 may store various programs and a plurality of pieces of data.

FIG. 8 is a diagram illustrating the mobile device 700 and the image forming apparatus 600 that perform wireless configuration by using NFC.

The mobile device 700 that supports an NFC function generates a profile for wireless configuration of the image forming apparatus 600 by using data obtained from the image forming apparatus 600 via NFC.

When the NFC tag 620 attached to the image forming apparatus 600 is tagged, an NFC tag processing unit (NFC tag processor) 720 of the mobile device 700 reads installation information of an application (hereinafter, the installation information) stored in the NFC tag 620. The installation information is used to install a wireless configuration application in the mobile device 700. For example, the installation information may include a URL for downloading the wireless configuration application, and information such as a unique name or unique number of the wireless configuration application which is for identifying the wireless configuration application.

A control unit (controller) 710 of the mobile device 700 generates the profile for wireless configuration of the image forming apparatus 600 by using the wireless configuration application that is installed based on the installation information. When the NFC tag 620 is tagged, the control unit 710 executes a market application so as to download the wireless configuration application. The market application is a program for searching and downloading an application according to an operating system (OS) installed in the mobile device 700. For example, if an Android OS is installed in the mobile device 700, the market application indicates an application named "Play Store". If an operating system IOS is installed in the mobile device 700, the market application indicates an application named "App Store". Also, a separate market application may exist according to a communication company that provides a service to the mobile device 700.

The control unit 710 may input installation information into a search window of the market application and then may automatically search for the wireless configuration application. The control unit 710 installs and executes the searched wireless configuration application.

When the installation information is input, the control unit 710 may automatically search for, may download, and may install the wireless configuration application without a separate operation or input.

The wireless configuration application generates the profile for wireless configuration of the image forming apparatus 600 by using wireless configuration information input from the user. The wireless configuration application scans and displays peripheral APs, and generates the profile based on an AP selected by the user from among the APs.

The wireless configuration application may generate the profile based on an AP to which the mobile device 700 is currently connected. That is, the wireless configuration application may not scan the peripheral APs or may not receive a selection input with respect to a target AP from the user, but may generate the profile so as to connect the image forming apparatus 600 to the AP to which the mobile device 700 is currently connected.

The wireless configuration application may display a first option for scanning the peripheral APs and a second option for displaying the AP to which the mobile device 700 is currently connected, and may operate according to an option selected by the user. In other words, the wireless configuration application displays the first option and the second option to the user, and when one of the first and second options is selected by the user, the wireless configuration application operates according to the selected option.

For example, when the first option is selected by the user, the wireless configuration application scans and displays the peripheral APs, and generates a profile for the image forming apparatus 600 to access an AP selected by the user from among the peripheral APs. If a password is required to access the AP selected by the user, the wireless configuration application displays an input window to which the user inputs the password, and receives as an input the password from the user. The wireless configuration application generates the profile for the image forming apparatus 600 to access the selected AP by using the password.

For another example, when the second option is selected by the user, the wireless configuration application generates a profile for the image forming apparatus 600 to access the AP to which the mobile device 700 is currently connected. In the case of the second option, the profile for the AP to which the mobile device 700 is currently connected is generated, so that the wireless configuration application may generate the profile without receiving an input of separate information from the user.

A wireless communication unit 730 of the mobile device 700 transmits the profile to the image forming apparatus 600. The wireless communication unit (wireless communicator) 730 may exchange data with the image forming apparatus 600 by using NFC, WFD, Bluetooth, or the like.

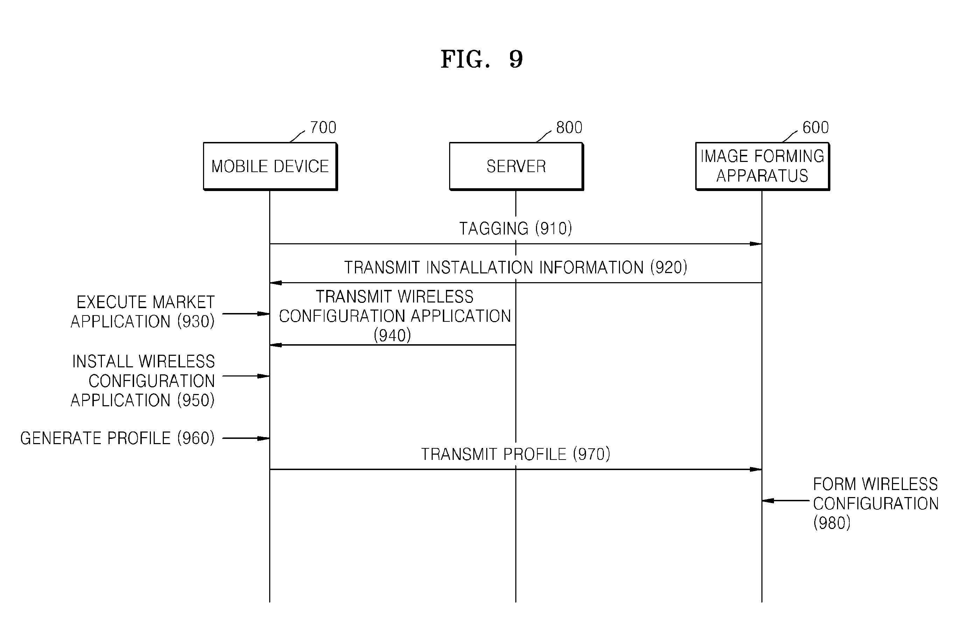

FIG. 9 is a flowchart of a method of forming a wireless configuration by the image forming apparatus 600. Referring to FIG. 9, the image forming apparatus 600 performs the wireless configuration by exchanging data with the mobile device 700 and a server 800.

In operation 910, the mobile device 700 is tagged to an NFC tag of the image forming apparatus 600. When a user approaches the mobile device 700 to the NFC tag attached to the image forming apparatus 600, the mobile device 700 may receive data stored in the NFC tag.

In operation 920, installation information stored in the NFC tag of the image forming apparatus 600 is transmitted to the mobile device 700. The installation information is used to install a wireless configuration application.

In operation 930, the mobile device 700 executes a market application. When the mobile device 700 receives the installation information from the NFC tag, the mobile device 700 executes the market application. The market application may vary according to types of the mobile device 700. The mobile device 700 may search for the wireless configuration application by inputting the installation information to the market application. In order to download the searched wireless configuration application, the mobile device 700 requests transmission with the server 800.

In operation 940, the server 800 transmits the wireless configuration application to the mobile device 700.

In operation 950, the mobile device 700 installs the wireless configuration application. When the wireless configuration application is downloaded to the mobile device 700, the mobile device 700 may install the wireless configuration application without a user command. Alternatively, the mobile device 700 may install the wireless configuration application after the mobile device 700 receives a user command with respect to installation of the wireless configuration application.

In operation 960, the mobile device 700 generates a profile for the wireless configuration of the image forming apparatus 600. The mobile device 700 receives an input of data for the wireless configuration from the user. The mobile device 700 may display an interface for the input of data from the user. In more detail, the mobile device 700 may display a list of APs that are accessible to the image forming apparatus 600 and may receive an input of an AP selected by the user from the list of APs. When the user selects the AP, the mobile device 700 displays an interface so as to receive an input of additional information for accessing the selected AP. For example, the additional information may be a password for the image forming apparatus 600 to access the selected AP or may be identification (ID) information of the image forming apparatus 600.

In operation 970, the mobile device 700 transmits the profile to the image forming apparatus 600.

In operation 980, the image forming apparatus 600 performs the wireless configuration based on the profile. In other words, the image forming apparatus 600 attempts to access the selected AP by using information included in the profile, and is connected to the selected AP by automatically inputting information required for the AP access.

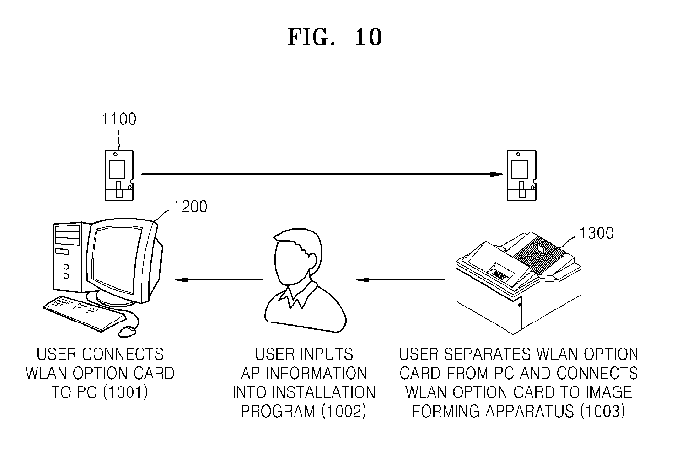

FIG. 10 illustrates an example in which wireless configuration of an image forming apparatus 1300 is performed by using a WLAN option card 1100. Referring to FIG. 10, a user may perform the wireless configuration of the image forming apparatus 1300 by using the WLAN option card 1100. Compared to a PC 1200, the image forming apparatus 1300 does not sufficiently have an input unit (input) or display unit (display) to perform the wireless configuration. Thus, the user has difficulties in directly inputting data for the wireless configuration in the image forming apparatus 1300. However, when the user connects the WLAN option card 1100 to the PC 1200, the user may further easily perform the wireless configuration of the image forming apparatus 1300.

In operation 1001, the user connects the WLAN option card 1100 to the PC 1200. When the WLAN option card 1100 is connected to the PC 1200, the PC 1200 may equally recognize the WLAN option card 1100 as an USB disk. The PC 1200 executes an installation program stored in the WLAN option card 1100. The installation program may be executed in the PC 1200 by the user. The installation program stored in the WLAN option card 1100 may match the image forming apparatus 1300. That is, the WLAN option card 1100 may be separately made according to a model of the image forming apparatus 1300. Thus, the WLAN option card 1100 stores information about the image forming apparatus 1300.

In operation 1002, the user inputs AP information into the executed installation program. The AP information input by the user indicates information about an AP to which the image forming apparatus 1300 is to be connected. The PC 1200 generates a profile for the wireless configuration of the image forming apparatus 1300, based on the input information. The PC 1200 stores the profile in the WLAN option card 1100.

In operation 1003, the user separates the WLAN option card 1100 from the PC 1200 and connects the WLAN option card 1100 to the image forming apparatus 1300.

The image forming apparatus 1300 performs the wireless configuration by using the profile stored in the WLAN option card 1100. Since the WLAN option card 1100 is made according to specification of the image forming apparatus 1300, when the WLAN option card 1100 is connected to the image forming apparatus 1300, the image forming apparatus 1300 may scan the profile stored in the WLAN option card 1100. The image forming apparatus 1300 forms the wireless configuration based on the profile stored in the WLAN option card 1100.

In operations 1001 through 1003, the user may form the wireless configuration of the image forming apparatus 1300 by using the WLAN option card 1100, without separately inputting data into the image forming apparatus 1300.

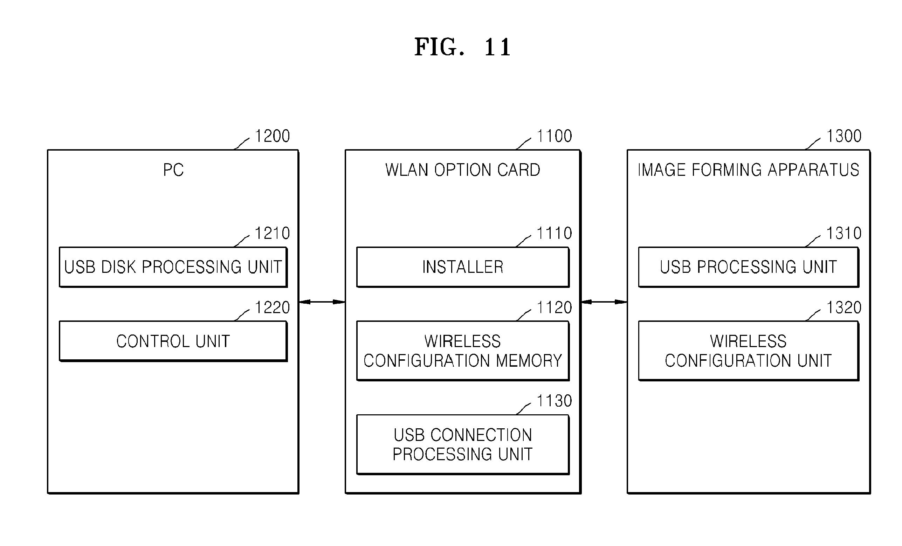

FIG. 11 illustrates the WLAN option card 1100, the image forming apparatus 1300, and the PC 1200 that forms the wireless configuration of the image forming apparatus 1300 by using the WLAN option card 1100.

Referring to FIG. 11, the WLAN option card 1100 includes an installer 1110, a wireless configuration memory 1120, and an USB connection processing unit (USB connection processor)1130. The WLAN option card 1100 is a device manufactured for the wireless configuration of the image forming apparatus 1300. The WLAN option card 1100 may include a connector (not shown) for physical connection to the PC 1200 and the image forming apparatus 1300, and may be manufactured together with or separately from the image forming apparatus 1300.

The USB connection processing unit 1130 processes data so as to allow the PC 1200 or the image forming apparatus 1300 to recognize the WLAN option card 1100 when the WLAN option card 1100 is connected to the PC 1200 or the image forming apparatus 1300. Thus, although a separate driver is not installed in the PC 1200 or the image forming apparatus 1300, the PC 1200 or the image forming apparatus 1300 may recognize the WLAN option card 1100.

For example, when the WLAN option card 1100 is connected to the PC 1200, the USB connection processing unit 1130 processes data so as to allow the PC 1200 to recognize the WLAN option card 1100 as an USB disk. When the WLAN option card 1100 is recognized as the USB disk to the PC 1200, the PC 1200 may scan or execute a plurality of pieces of data stored in the WLAN option card 1100.

Also, when the WLAN option card 1100 is connected to the image forming apparatus 1300, the USB connection processing unit 1130 processes data so as to allow the image forming apparatus 1300 to recognize that the WLAN option card 1100 is connected to the image forming apparatus 1300. The WLAN option card 1100 is manufactured in such a manner that, when the WLAN option card 1100 is connected to the image forming apparatus 1300, the image forming apparatus 1300 may recognize the WLAN option card 1100. That is, since the WLAN option card 1100 is a device manufactured for WLAN configuration of the image forming apparatus 1300, the image forming apparatus 1300 may recognize that the WLAN option card 1100 is connected to the image forming apparatus 1300.

The installer 1110 is a program stored in the wireless configuration memory 1120. When the WLAN option card 1100 is connected to the PC 1200, the WLAN option card 1100 is recognized as a disk to the PC 1200. When the WLAN option card 1100 is recognized as the disk, the installer 1110 is displayed as an execution program. The installer 1110 is executed according to an execution command from the user.

The installer 1110 is the program for wireless configuration of the image forming apparatus 1300. Thus, when a user executes the installer 1110, the installer 1110 receives an information input for the wireless configuration of the image forming apparatus 1300 from the user, and generates a profile based on the information. The profile includes a plurality of pieces of information for the wireless configuration of the image forming apparatus 1300. For example, the profile includes a password for allowing the image forming apparatus 1300 to be wirelessly connected to an AP. Also, the profile includes information indicating to which AP the image forming apparatus 1300 is wirelessly connected. The profile includes SSID information indicating a wireless network to be used by the image forming apparatus 1300. The profile is encrypted by using a securing method such as WPA, WPA2, or the like.

The installer 1110 is a program specialized for the image forming apparatus 1300. Thus, items for executing and setting the installer 1110 are previously designed for the wireless configuration of the image forming apparatus 1300. After the installer 1110 generates the profile, the installer 1110 may store the profile in the wireless configuration memory 1120 without a command or a control by the user.

The wireless configuration memory 1120 stores information for the wireless configuration of the image forming apparatus 1300. For example, the wireless configuration memory 1120 stores specification of the image forming apparatus 1300. Also, the wireless configuration memory 1120 stores a profile generated in the PC 1200. The wireless configuration memory 1120 is a storage medium such as a flash memory, and a file system equal to that of a disk is applied to the wireless configuration memory 1120.

The PC 1200 includes an USB disk processing unit (USB disk processor) 1210 and a control unit (controller) 1220. The PC 1200 indicates an electronic device capable of recognizing an USB disk, and installing and executing a program. The PC 1200 includes not only a desktop PC but also includes a tablet PC, a notebook, or the like.

The USB disk processing unit 1210 recognizes a device that is connected to an USB port. The PC 1200 has an USB terminal, and when the WLAN option card 1100 is connected to the USB terminal, the PC 1200 recognizes the WLAN option card 1100 as an USB disk. Thus, the PC 1200 may scan a program or files stored in the WLAN option card 1100. For example, the PC 1200 may scan the program or the files stored in the WLAN option card 1100, by using a windows explorer.

The control unit 1220 generates the profile for the wireless configuration of the image forming apparatus 1300, by using the installer 1110 stored in the WLAN option card 1100. The control unit 1220 executes the installer 1110 according to a command by the user. The control unit 1220 generates the profile by using the installer 1110. When the installer 1110 is executed, the control unit 1220 generates the profile, based on the information for the wireless configuration of the image forming apparatus 1300 which is received from the user.

For example, the control unit 1220 receives, from the user, an information input indicating to which AP the image forming apparatus 1300 is wirelessly connected. The control unit 1220 may display a list of APs that are accessible to the image forming apparatus 1300. The user may select one of the APs from the list.

The control unit 1220 receives from the user a password input for allowing the image forming apparatus 1300 to be wirelessly connected to an AP.

The control unit 1220 generates the profile including information about the AP to be used by the image forming apparatus 1300. The control unit 1220 encrypts the profile by using a securing method such as WPA, WPA2, or the like, and stores the profile in the WLAN option card 1100.

Since the WLAN option card 1100 includes the installer 1110 that is made according to the specification of the image forming apparatus 1300, the user may easily generate the profile for the wireless configuration of the image forming apparatus 1300 by only executing the installer 1110. In other words, if the user inputs a plurality of pieces of information that are requested by the executed installer 1110, the user may generate the profile for the wireless configuration of the image forming apparatus 1300.

The image forming apparatus 1300 performs the wireless configuration by using the profile stored in the WLAN option card 1100. When the WLAN option card 1100 is connected to the image forming apparatus 1300, the image forming apparatus 1300 automatically scans the profile and performs the wireless configuration according to the plurality of pieces of information included in the profile.

The image forming apparatus 1300 includes an USB processing unit (USB processor) 1310 and a wireless configuration unit 1320. The USB processing unit 1310 recognizes the WLAN option card 1100. When the WLAN option card 1100 is connected to the image forming apparatus 1300, the USB processing unit 1310 may read data stored in the WLAN option card 1100. That is, the USB processing unit 1310 includes a program and a connector for recognizing the WLAN option card 1100.

The wireless configuration unit (wireless configurer) 1320 determines whether a profile is stored in the recognized WLAN option card 1100. When the profile is stored, the wireless configuration unit 1320 performs the wireless configuration by using the profile.

The wireless configuration unit 1320 performs the wireless configuration of image forming apparatus 1300 by using the data read by the USB processing unit 1310. For example, the read data may be the profile stored in the WLAN option card 1100. The wireless configuration unit 1320 accesses a target AP by using a plurality of pieces of information included in the profile. That is, the wireless configuration unit 1320 accesses the target AP that is designated in the profile via Wi-Fi.

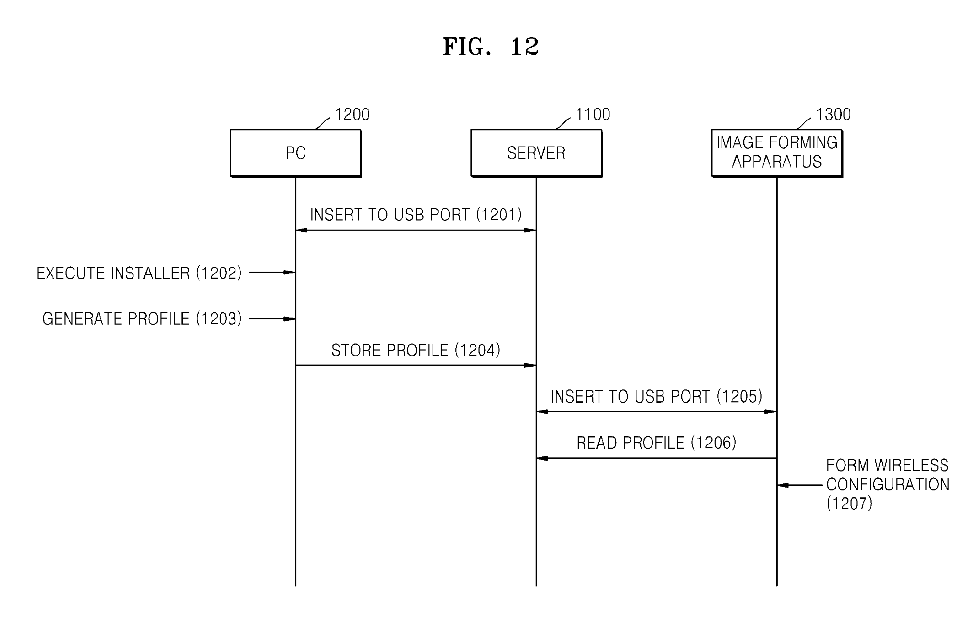

FIG. 12 is a flowchart of a method of a forming a wireless configuration of the image forming apparatus 1300 by using the WLAN option card 1100.

Referring to FIG. 12, a user may perform the wireless configuration of image forming apparatus 1300 by using the PC 1200 and the WLAN option card 1100.

In operation 1201, the user inserts the WLAN option card 1100 into the PC 1200. The WLAN option card 1100 may be connected to an USB port of the PC 1200.

In operation 1202, the PC 1200 executes the installer 1110 stored in the WLAN option card 1100. When the PC 1200 receives an execution command with respect to the installer 1110 from the user, the PC 1200 may execute the installer 1110.

In operation 1203, the PC 1200 generates a profile. In more detail, the PC 1200 executes the installer 1110, and generates the profile by using the executed installer 1110. When the installer 1110 is executed, the user inputs data requested by the installer 1110.

In operation 1204, the PC 1200 stores the profile generated by using the installer 1110 in the WLAN option card 1100.

In operation 1205, the user inserts the WLAN option card 1100 into the image forming apparatus 1300. The WLAN option card 1100 may be connected to a connector of the image forming apparatus 1300. For example, the connector of the image forming apparatus 1300 has the same shape as the USB port of the PC 1200. Also, the connector of the image forming apparatus 1300 may be a separate port to which the WLAN option card 1100 and the image forming apparatus 1300 may be connected.

In operation 1206, the image forming apparatus 1300 reads the profile stored in the WLAN option card 1100. When the WLAN option card 1100 is connected to the image forming apparatus 1300, the image forming apparatus 1300 scans a profile stored in the WLAN option card 1100, and if the profile is stored, the image forming apparatus 1300 reads a plurality of pieces of information included in the profile. That is, the image forming apparatus 1300 reads information about an AP, or the like included in the profile.

In operation 1207, the image forming apparatus 1300 performs the wireless configuration, based on the profile. The image forming apparatus 1300 attempts Wi-Fi connection by using the information included in the profile. In other words, the image forming apparatus 1300 attempts the Wi-Fi connection to a target AP that is designated in the profile, and when a password is required for connection to the target AP, the image forming apparatus 1300 automatically inputs the password stored in the profile, without an input from the user. Thus, when the user attempts to connect the image forming apparatus 1300 to the AP, the user may form the wireless configuration of the image forming apparatus 1300 by simply connecting the WLAN option card 1100 to the image forming apparatus 1300 without separately inputting data.

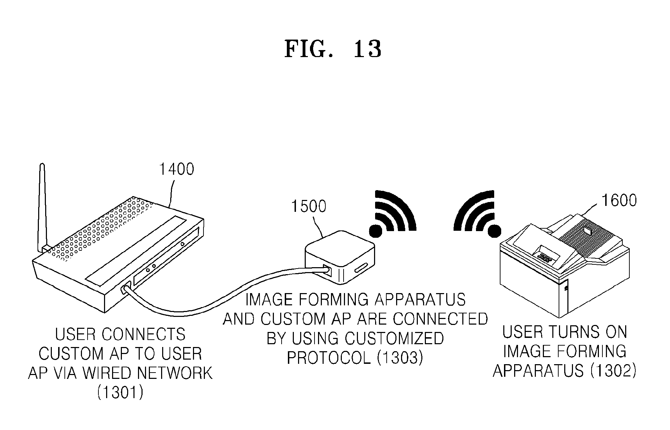

FIG. 13 illustrates an example in which wireless configuration of an image forming apparatus 1600 is formed by using a custom AP 1500. Referring to FIG. 13, a user may perform the wireless configuration of the image forming apparatus 1600 by connecting the custom AP 1500 to a user AP 1400.

In operation 1301, the user connects the custom AP 1500 to the user AP 1400 via a wired network. That is, the custom AP 1500 and the user AP 1400 are connected via a cable.

In operation 1302, the user turns on the image forming apparatus 1600. When the image forming apparatus 1600 is turned on, the image forming apparatus 1600 may detect a wireless signal of the custom AP 1500.

In operation 1303, the image forming apparatus 1600 and the custom AP 1500 are connected by using their own customized protocol. When the image forming apparatus 1600 and the custom AP 1500 are manufactured, the customized protocol that is wirelessly communicable only between the image forming apparatus 1600 and the custom AP 1500 is set. Thus, when the image forming apparatus 1600 and the custom AP 1500 operate, the image forming apparatus 1600 and the custom AP 1500 may recognize each other. Also, when the image forming apparatus 1600 and the custom AP 1500 recognize each other, the image forming apparatus 1600 and the custom AP 1500 may exchange data by using the customized protocol. Thus, the custom AP 1500 may transmit a profile for the wireless configuration to the image forming apparatus 1600 by using the customized protocol. The image forming apparatus 1600 receives the profile for the wireless configuration from the custom AP 1500, and forms the wireless configuration based on the profile. Thus, the user may form the wireless configuration of the image forming apparatus 1600 by simply connecting the custom AP 1500 to a wired AP.

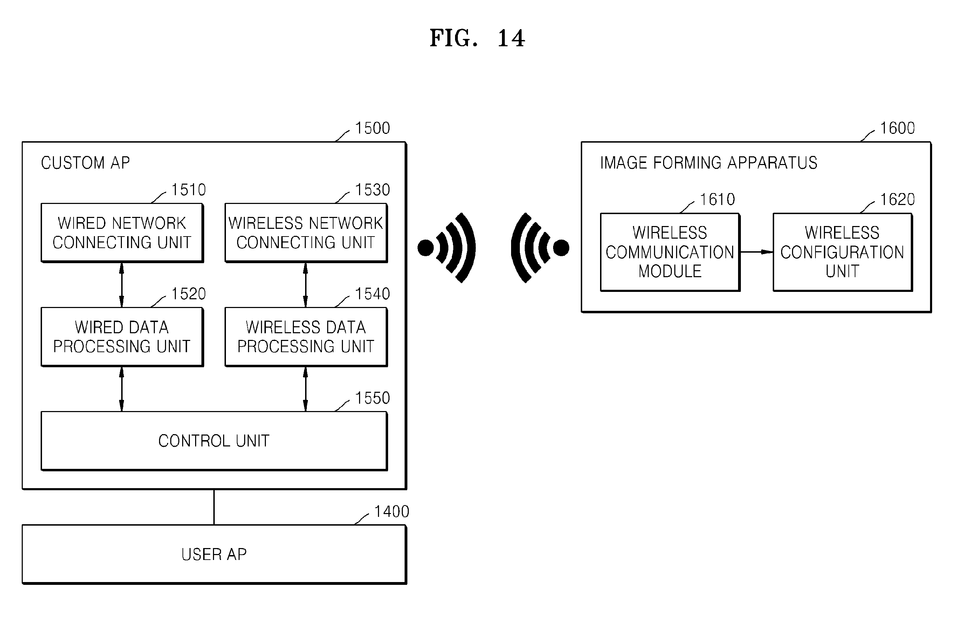

FIG. 14 illustrates the wireless configuration of the image forming apparatus 1600 which is formed by using the custom AP 1500. The custom AP 1500 performs the same function as a general AP, and exchanges data with the image forming apparatus 1600 by using a customized protocol. The custom AP 1500 and the user AP 1400 are wiredly connected, and the custom AP 1500 and the image forming apparatus 1600 are connected by using the customized protocol. After the custom AP 1500 and the user AP 1400 are connected, the custom AP 1500 and the image forming apparatus 1600 are wirelessly connected. The custom AP 1500 may be wirelessly connected to a plurality of the image forming apparatuses 1600.

The custom AP 1500 includes a wired network connecting unit (network connector) 1510, a wired data processing unit 1520, a wireless network connecting unit (wireless network connector) 1530, a wireless data processing unit (wireless data processor) 1540, and a control unit (controller) 1550.

The wired network connecting unit 1510 is a unit for wired connection to the user AP 1400. The wired network connecting unit 1510 includes a connector for physical connection to the user AP 1400. The wired network connecting unit 1510 transmits, to the wired data processing unit 1520, data that is received from the user AP 1400. For example, the data received from the user AP 1400 may an internet protocol (IP) that is allocated to the custom AP 1500.

The wired data processing unit 1520 forms a connection to a network. The custom AP 1500 is allocated the IP from the user AP 1400 and then is connected to the network. The wired data processing unit 1520 is a program for forming a connection to the network.

The wireless network connecting unit 1530 is a unit for wireless connection to the image forming apparatus 1600. The wireless network connecting unit 1530 includes a physical device such as an antenna. The wireless network connecting unit 1530 may wirelessly exchange data with the image forming apparatus 1600.

The wireless data processing unit 1540 processes data to be transmitted to the image forming apparatus 1600. That is, the wireless data processing unit 1540 converts data according to the customized protocol, wherein the data is input by the control unit 1550. That is, the wireless data processing unit 1540 generates the data to be transmitted to the image forming apparatus 1600, according to the customized protocol that is pre-set for communication with the image forming apparatus 1600. For example, the customized protocol includes a plurality of data fields and may include a new field that is defined between the custom AP 1500 and the image forming apparatus 1600. Also, the data fields may be configured in an order according to the data fields are defined between the custom AP 1500 and the image forming apparatus 1600. The customized protocol may include a plurality of data fields including amended data fields.

The wireless data processing unit 1540 scans the peripheral image forming apparatuses 1600. When the IP is allocated from the user AP 1400, the wireless data processing unit 1540 scans the peripheral image forming apparatuses 1600. The wireless data processing unit 1540 may periodically scan the peripheral image forming apparatuses 1600. Thus, when the new image forming apparatus 1600 is scanned, the wireless data processing unit 1540 transmits information about the new image forming apparatus 1600 to the control unit 1550.

The control unit 1550 performs an operation for the wireless configuration of the image forming apparatus 1600. When the control unit 1550 is allocated the IP from the user AP 1400 and then is connected to the network, the control unit 1550 performs the wireless configuration of the image forming apparatus 1600.

The control unit 1550 generates network information for the wireless configuration of the image forming apparatus 1600. The network information may include the IP of the user AP 1400 or an IP of the custom AP 1500. Also, the network information may include a profile for allowing the image forming apparatus 1600 to access a target AP.

The control unit 1550 may transmit the network information including the IP of the user AP 1400 or the IP of the custom AP 1500 to the image forming apparatus 1600. Also, the network information may include an IP allocated to the image forming apparatus 1600. Although the network information does not include the IP to be allocated to the image forming apparatus 1600, the image forming apparatus 1600 may determine its IP by referring to the IP of the user AP 1400 or the IP of the custom AP 1500. That is, the image forming apparatus 1600 may determine the IP by partially amending the IP of the user AP 1400 or the IP of the custom AP 1500. The control unit 1550 transmits information about the IP to the image forming apparatus 1600 via the wireless data processing unit 1540 and the wireless network connecting unit 1530.

The control unit 1550 may designate a target AP to which the image forming apparatus 1600 is connected. That is, the control unit 1550 transmits, to the image forming apparatus 1600, a profile that designates to which AP from among the user AP 1400 and the custom AP 1500 the image forming apparatus 1600 is to be connected. Also, the control unit 1550 may designate an access by the image forming apparatus 1600 to an AP other than the user AP 1400 and the custom AP 1500. The profile may include a password for an access to the target AP. The control unit 1550 transmits the network information including the target AP to the image forming apparatus 1600 via the wireless data processing unit 1540 and the wireless network connecting unit 1530.

When a plurality of the image forming apparatuses 1600 are scanned by the wireless data processing unit 1540 and the wireless network connecting unit 1530, the control unit 1550 performs wireless configuration according to a total number of the scanned image forming apparatuses 1600. That is, the plurality of the image forming apparatuses 1600, each including a customized connection unit for the custom AP 1500, may exist around the custom AP 1500. In this case, the control unit 1550 may designate a plurality of APs to which the image forming apparatuses 1600 are connected, respectively, or may allocate different IPs to the image forming apparatuses 1600, respectively. Thus, although the image forming apparatuses 1600 exists around the custom AP 1500, and a user does not separately form a wireless configuration with respect to each of the image forming apparatuses 160, the wireless configuration of each of the image forming apparatuses 1600 is automatically completed by the custom AP 1500.

When the custom AP 1500 is connected to the user AP 1400, the custom AP 1500 automatically forms the wireless configuration of the image forming apparatus 1600. When the custom AP 1500 is connected to the user AP 1400, the custom AP 1500 automatically scans the peripheral image forming apparatuses 1600.

The custom AP 1500 provides both wired and wireless functions. That is, the custom AP 1500 is wiredly connected to the user AP 1400 and is wirelessly connected to the image forming apparatus 1600.

The user AP 1400 is an AP that is currently used by the user. That is, the user AP 1400 is allocated an IP and is currently connected to the network. The user AP 1400 may perform a dynamic host configuration protocol (DHCP) function. The DHCP function involves allocating an IP. The user AP 1400 may allocate an IP address to the custom AP 1500 by using the DHCP function.

The image forming apparatus 1600 includes a wireless communication module 1610 and a wireless configuration unit 1620. The image forming apparatus 1600 performs the wireless configuration by using the network information received from the custom AP 1500.

The wireless communication module 1610 functions to wirelessly communicate with the custom AP 1500. That is, the wireless communication module 1610 may exchange data with the custom AP 1500 by using a customized protocol. For example, the wireless communication module 1610 may receive the network information from the custom AP 1500. The network information may include the IP of the user AP 1400 or the IP of the custom AP 1500. Also, the network information may include the profile for allowing the image forming apparatus 1600 to access the target AP.

The wireless configuration unit 1620 forms the wireless configuration based on the network information received from the wireless communication module 1610. When the network information includes the target AP, the wireless configuration unit 1620 attempts to access the target AP. When the network information includes an allocated IP, the wireless configuration unit 1620 accesses the network by using the allocated IP. When the network information includes the IP of the user AP 1400 or the IP of the custom AP 1500, the wireless configuration unit 1620 may allocate an IP to itself by referring to the IP of the user AP 1400 or the IP of the custom AP 1500 and then may access the network.

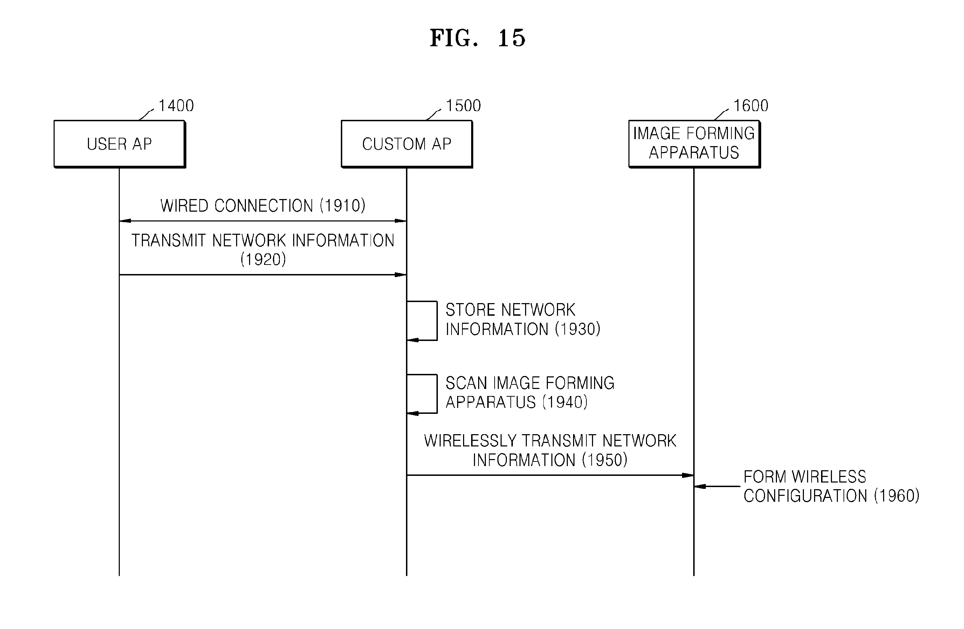

FIG. 15 is a flowchart of a method of a forming a wireless configuration of the image forming apparatus 1600 by using the custom AP 1500.

In operation 1910, the user AP 1400 and the custom AP 1500 are wiredly connected. That is, a user connects the custom AP 1500 to the user AP 1400.

In operation 1920, the user AP 1400 transmits network information to the custom AP 1500. For example, the network information may include an IP that is allocated to the custom AP 1500 by the user AP 1400 or may include an IP of the user AP 1400.

In operation 1930, the custom AP 1500 stores the network information. The custom AP 1500 may access the network by using the allocated IP.

In operation 1940, the custom AP 1500 scans the image forming apparatuses 1600. The custom AP 1500 may scan only the image forming apparatuses 1600 that support a customized protocol.

In operation 1950, the custom AP 1500 wirelessly transmits the network information to the scanned image forming apparatus 1600. The network information may include a target AP to which the image forming apparatus 1600 is to be connected, or an IP that is allocated to the image forming apparatus 1600. Also, the network information may include the IP of the user AP 1400 and the IP of the custom AP 1500.

In operation 1960, the scanned image forming apparatus 1600 performs the wireless configuration based on the network information.

Thus, although a user does not input separate information to the image forming apparatus 1600, the user may perform the wireless configuration of the image forming apparatus 1600 by connecting the custom AP 1500 to the user AP 1400.

As described above, according to the one or more of the above embodiments, the image forming apparatus may form a wireless configuration by receiving a profile that is generated by using installation information of an application stored in an NFC tag.

Also, according to the one or more of the above embodiments, the profile for the wireless configuration of the image forming apparatus may be generated by using, via NFC tagging, the application that is previously made according to specification of the image forming apparatus.

Processes, functions, methods, and/or software in apparatuses described herein may be recorded, stored, or fixed in one or more non-transitory computer-readable storage media (computer readable recording medium) that includes program instructions (computer readable instructions) to be implemented by a computer to cause one or more processors to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable storage media include magnetic media, such as hard disks, floppy disks, and magnetic tape; optical media such as CD ROM disks and DVDs; magnetooptical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more computer-readable storage media, in order to perform the operations and methods described above, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus that supports near field communication (NFC), the image forming apparatus comprising:
an NFC tag which stores installation information of an application;
a wireless communication module which receives a profile including wireless configuration data from a mobile device, wherein the wireless configuration data is input by a user for execution of the application that is installed in the mobile device by using the installation information; and
a controller which forms a wireless configuration based on the profile.

2. The image forming apparatus of claim 1, wherein the installation information comprises a uniform resource locator (URL) for downloading the application.

3. The image forming apparatus of claim 1, wherein the profile comprises a password for allowing the image forming apparatus to be wirelessly connected to an access point (AP).

4. The image forming apparatus of claim 1, wherein the profile comprises information indicating to which access point (AP) the image forming apparatus is to be wirelessly connected.

5. The image forming apparatus of claim 1, wherein the profile comprises service set identifier definition (SSID) information indicating a wireless network to be used by the image forming apparatus.

6. The image forming apparatus of claim 1, wherein:
when the wireless configuration is completed, the controller creates a completion message, and
the wireless communication module transmits the completion message to the application.

7. The image forming apparatus of claim 1, wherein the application is previously generated according to specification of the image forming apparatus and then is stored in a server.

8. A mobile device that supports near field communication (NFC) with an image forming apparatus, the mobile device comprising:
an NFC tag processor which reads installation information of an application stored in an NFC tag when the NFC tag attached to the image forming apparatus is tagged;
a controller which generates a profile for wireless configuration of the image forming apparatus by using a wireless configuration application installed based on the installation information; and
a wireless communicator which transmits the profile to the image forming apparatus.

9. The mobile device of claim 8, wherein, when the NFC tag is tagged, the controller executes a market application for downloading the wireless configuration application.

10. The mobile device of claim 8, wherein the controller scans the wireless configuration application by inputting the installation information into a search window of the market application.

11. The mobile device of claim 10, wherein the controller installs and executes the wireless configuration application.

12. The mobile device of claim 8, wherein the wireless configuration application generates the profile for the wireless configuration of the image forming apparatus by using wireless configuration information that is input from a user.

13. The mobile device of claim 8, wherein the wireless configuration application scans and displays peripheral access points (APs), and generates the profile based on an access point (AP) selected by a user from among the peripheral APs.

14. The mobile device of claim 8, wherein the wireless configuration application generates the profile based on an access point (AP) to which the mobile device is currently connected.

15. The mobile device of claim 8, wherein the wireless configuration application displays a first option for scanning peripheral access points (APs) and a second option for displaying an access point (AP) to which the mobile device is currently connected, and operates according to an option selected by a user.

16. The mobile device of claim 8, wherein the installation information is for installing the wireless configuration application in the mobile device.

17. The mobile device of claim 8, wherein the installation information comprises a uniform resource locator (URL) for downloading the wireless configuration application.

18. A method of forming a wireless configuration by an image forming apparatus that supports near field communication (NFC), the method comprising:
reading installation information of an application stored in an NFC tag that is attached to the image forming apparatus;
generating a profile for the wireless configuration of the image forming apparatus by using a wireless configuration application installed based on the installation information; and
forming the wireless configuration based on the profile.

19. At least one non-transitory computer-readable recording medium storing computer-readable instructions that control at least one processor to implement the method of claim 18.
